Europäisches Patentamt

European Patent Office

Office européen des brevets

(11) Publication number: **0 505 982 A1**

# EUROPEAN PATENT APPLICATION

(21) Application number: **92105053.0**

(22) Date of filing: **24.03.92**

(51) Int. Cl.⁵: **H02M 7/217, H02M 3/335**

(30) Priority: **26.03.91 JP 61419/91**

(43) Date of publication of application:
**30.09.92 Bulletin 92/40**

(84) Designated Contracting States:
**DE GB**

(71) Applicant: **HITACHI, LTD.**
**6, Kanda Surugadai 4-chome**
**Chiyoda-ku, Tokyo 101(JP)**
Applicant: **CHUBU HITACHI ELECTRIC CO., LTD.**
**120-1, Saiwaicho, Inazawa-shi**
**Aichi-ken(JP)**

(72) Inventor: **Kino, Jiro**

98-5, Kamikawacho
Seto-shi(JP)
Inventor: **Shikanai, Naoki**
**Yuhausu Iwasaki, 112-388, Ashihazama, Iwasaki**
**Nisshincho, Aichi-gun, Aichi-ken(JP)**
Inventor: **Takahashi, Masami**
**Aioiyama Jutaku 8-205, 148, Hisakata-1-chome**
**Tenpaku-ku, Nagoya-shi(JP)**

(74) Representative: **Patentanwälte Beetz - Timpe - Siegfried - Schmitt-Fumian- Mayr**
**Steinsdorfstrasse 10**
**W-8000 München 22(DE)**

(54) **Switching regulator.**

(57) There is provided a switching regulator for converting an input a.c. voltage to a d.c. voltage. It includes rectifying means (1) for generating a pulsating d.c. voltage, conversion means (2, 3) for generating an a.c. voltage, rectifying and smoothing means (5, 6) for outputting a rectified and smoothed voltage, error detection means (8, 9, 10, 12) for detecting an error signal between the output d.c. voltage and a predetermined reference voltage, and control means (7) for controlling operation of the conversion means (2, 3) to make a current flowing through the rectifying means (1) analogous to a sine wave having the same phase as the input a.c. voltage. Further, the conversion means includes a flyback transformer (3) and on-off means (2) controlled by the control means. In the on-state, a current flows from the rectifying means into the primary winding to store electromagnetic energy. In the off-state, the stored electromagnetic energy is outputted to the rectifying and smoothing means. The error signal is transmitted to the control means via a photocoupler.

FIG. 2

The present invention relates to a switching regulator, and in particular to a switching regulator which is provided with commercial a.c. power as its input and which outputs stabilized d.c. voltage.

Electronic devices such as personal computers need stabilized d.c. voltage. For this purpose, switching regulators are typically used. Conventional switching regulators have small size and high efficiency. However, commercial a.c. voltage is inputted to conventional switching regulators, and large current distortion is caused in an input rectifier circuit for rectifying the a.c. input voltage. Therefore, conventional switching regulators have a problem of low input current power factor. As for reduction of this current distortion, there is a technique for reducing the current distortion (or improving the power factor) as described in JP-A-63-55612, for example. In accordance with this technique, the input current waveform is not adjusted to a voltage waveform (sine wave). When a switching regulator having no power factor improving circuit is activated, a power factor improving circuit is activated to make correction for improving the overall current power factor.

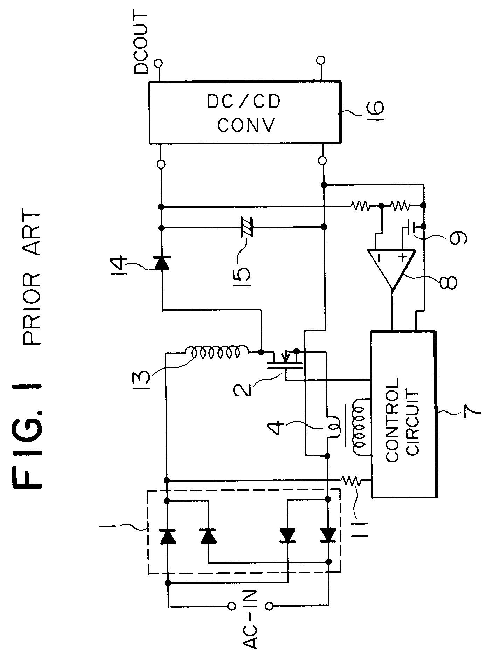

Fig. 1 is a circuit diagram showing the configuration of the above described conventional switching regulator provided with the power factor improving function.

In this switching regulator, a.c. input voltage is converted into pulsating d.c. voltage (continuous half-wave waveform of sine wave) by a rectifier 1 and sent to inductance 13 and a transistor switch 2 connected in series. The transistor switch 2 is subject to on-off control exercised by a control circuit 7. Pulsating d.c. voltage is inputted to the control circuit 7 via a resistor 11. A current flowing through the transistor switch 2 is inputted to the control circuit 7 via a current transformer 4. Further, an output voltage error obtained by comparison with reference voltage 9 by means of voltage dividing resistors 12 is inputted to the control circuit 7 via a differential amplifier 8. The control circuit 7 so controls on-off of the transistor switch 2 as to make the current flowing through the rectifier 1 similar to a sine wave having the same phase as that of the input voltage. Such a control circuit is well known.

When the transistor switch 2 is on, magnetic energy is stored in the inductance 13. When the transistor switch 2 turns off, this magnetic energy is transferred to a smoothing capacitor 15 through a rectifier 14. That is to say, the current flowing from the rectifier into the inductance 13 increases when the transistor switch 2 is on, and the current decreases when the transistor switch 2 is off. When this transistor switch 2 turns off, the magnetic energy stored in the inductance 13 is transferred to the smoothing capacitor 15 through the rectifier 14.

Because of this energy transfer, the voltage across the smoothing capacitor 15 becomes higher than the peak value of the input voltage. For example, in case of the peak value of 140 V for 100 Va.c. which is typical in Japan, this output d.c. voltage becomes at least 150 V. In this way, high-tension d.c. voltage can be obtained with an input current power factor so improved as to be at least 90%.

Since electronic devices such as personal computers are activated typically with low voltage such as several volt, a DC-DC converter 16 is used to lower the output d.c. voltage to a low voltage.

In the prior art, the d.c. voltage obtained from a switching regulator is thus comparatively high voltage. Therefore, a switching regulator cannot be used directly as power supply of electronic devices such as personal computers. As a result, a DC-DC converter must further be used. In addition, the output d.c. circuit is directly connected to a commercial input voltage source. If a human hand touches the low d.c. output voltage circuit, therefore, it sometimes undergoes electric shock of commercial a.c. voltage. In addition to step-down performed by the DC-DC converter, therefore, it is necessary to perform potential isolation (insulation) of the output d.c. voltage from the input commercial voltage source.

An object of the present invention is to provide a small-sized highly efficient switching regulator which is adapted to supply arbitrary stabilized low d.c. voltage isolated in potential from the input a.c. voltage with a high input power factor and which is suitable for power supply of electronic devices such as personal computers.

In a switching regulator including a rectifier for converting a sinusoidal input a.c. voltage to a pulsating d.c. voltage, an on-off circuit for converting the pulsating d.c. voltage converted by the above described rectifier into an a.c. voltage again, a rectifying and smoothing circuit for converting the a.c. voltage converted by the on-off circuit to a d.c. voltage and outputting the d.c. voltage, an error comparison circuit for detecting an error between the d.c. voltage converted and outputted by the rectifying and smoothing circuit and a reference voltage predetermined arbitrarily, and a control circuit for controlling the operation of the on-off circuit on the basis of the error detected by the above described error comparison circuit and for making the current flowing through the rectifier analogous to a sine wave having the same phase as the input a.c. voltage, the sinusoidal input a.c. voltage being converted to a stabilized d.c. voltage with a high power factor and outputted by the switching regulator, the present invention may provide that the on-off circuit includes a flyback transformer having a primary winding and a secondary winding respectively insulated electrically, receiving the pulsating d.c. voltage converted by the rectifier into the primary winding, storing magnetic energy, and outputting the magnetic energy stored in the primary winding from the secondary winding to the rectifying and smoothing circuit when the pulsating d.c. voltage inputted to the primary winding turns off, and the error comparison circuit includes an error signal transmission circuit for insulating this error comparison circuit from the control circuit and for transmitting an error signal indicating an error detected by the error comparison circuit to the control circuit, stabilized d.c. voltage insulated from an input a.c. voltage source and associated with an arbitrary load being outputted.

Fig. 1 is a circuit diagram showing the configuration of a switching regulator of the prior art;

Fig. 2 is a circuit diagram showing an embodiment of a switching regulator according to the present invention;

Fig. 3 is a circuit diagram showing another embodiment of a switching regulator according to the present invention;

Fig. 4 is a circuit diagram showing still another embodiment of a switching regulator according to the present invention; and

Fig. 5 is a circuit diagram showing still another embodiment of a switching regulator according to the present invention.

The present invention will be described hereinafter with reference to the accompanying drawings.

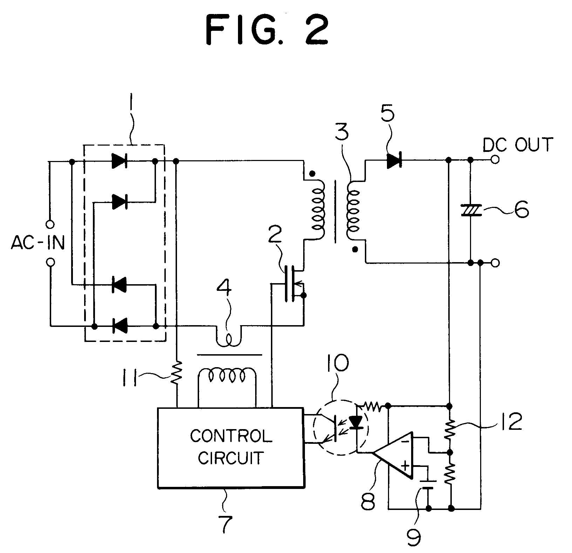

Fig. 2 is a block circuit diagram showing an embodiment of a configuration of a switching regulator according to the present invention.

A switching regulator of this embodiment includes a rectifier 1 for rectifying an a.c. input voltage (commercial a.c. voltage) to yield a pulsating d.c. voltage, a flyback transformer 3 having a primary winding connected to the rectifier 1 in series, a transistor switch 2 for turning on/off the pulsating d.c. voltage inputted to the primary side of the flyback transformer 3, and a control circuit 7 for controlling the on/off operation of the transistor switch 2. A current fed from a secondary winding of the flyback transformer 3 is rectified by a rectifier 5 and smoothed by a smoothing capacitor 6. The voltage rectified by the rectifier 5 is divided by voltage dividing resistors 12. A resultant value is compared with a reference voltage 9 by an error amplifier 8 to measure the difference between them. The result of measurement (error signal) made by the error amplifier 8 is transmitted to the control circuit 7 via a photocoupler 10 serving as an error signal transmission circuit in an electrically insulated state. The error signal supplied from the photocoupler 10, the pulsating d.c. voltage supplied from the rectifier 1 via a resistor 11 and required for adjusting the waveform of the current flowing through the rectifier 1, and a detected value of the current flowing through the transistor switch 2 supplied from a current transformer 4 are inputted to the control circuit 7. On the basis of these input signals, the control circuit 7 controls the transistor switch 2. Since this control circuit is well known, it will not be herein described in detail. The flyback transformer 3 and the transistor switch 2 form an on-off circuit. The rectifier 5 and the smoothing capacitor 6 form a rectifying and smoothing circuit. The reference voltage 9, the voltage-dividing resistors 12, and the error amplifier 8 form an error comparison circuit.

In the present embodiment, the transistor switch 2 is a power MOSFET, the gate of which is driven by the control circuit 7. This drive is so performed as to make the waveform of the current flowing through the rectifier 1 analogous to a sine wave having the same phase as the input voltage. That is to say, on the basis of the pulsating d.c. voltage inputted to the control circuit 7 via the resistor 11, the detected value of the current flowing through the transistor switch 2 inputted from the current transformer 4 to the control circuit 7, and the error signal supplied from the secondary output voltage detection circuit (error comparison circuit) including the reference voltage 9, the voltage dividing resistors 12, the error amplifier 8, and the photocoupler 10, the control circuit 7 controls the drive of the transistor switch 2 so that the waveform of the current supplied from the input a.c. voltage source to the rectifier 1 may become analogous to a sine wave having the same phase as the input voltage. The principle of this control is identical with that of the prior art described before by referring to Fig. 1. This technique is known and can be implemented by using commercially available monolithic integrated circuits in some cases.

Thus in the switching regulator of the present embodiment, the flyback transformer 3 is used in the on-off circuit instead of the inductance 13 of the prior art shown in Fig. 1 and there is provided a photocoupler 10 for transmitting the feedback signal (error signal), which is supplied from the differential amplifier 8 (error comparison circuit), to the control circuit 7 so that the feedback signal may be insulated from the control circuit 7. As hereafter described, therefore, it becomes possible to provide an arbitrary stabilized d.c. voltage insulated from the input a.c. voltage source and having a high input power factor.

The input a.c. voltage (commercial a.c. voltage) is rectified by the rectifier 1, pulsating d.c. voltage being thus obtained. When the transistor switch 2 is held in the on-state by the control circuit 7, the current from the rectifier 1 flows into the primary winding of the flyback transformer 3 and electromagnetic energy is stored in this primary winding. When the transistor switch 2 turns off, energy is transferred from the secondary winding to the smoothing capacitor 6 through the rectifier 5 by the function of the flyback transformer 3. The rectifier 5 is connected to the secondary winding of the flyback transformer 3 in series with the polarity shown in Fig. 2. When the transistor switch 2 is off, the rectifier 5 becomes conductive. The value of current flowing through this rectifier 5 is obtained by converting the current, which has flowed through the primary winding of the flyback transformer 3 immediately before the transistor switch 2 turns off, by using the reciprocal of the turns ratio of the flyback transformer 3. Further, the value of the current flowing through the rectifier 5 decreases in proportion to the voltage across the smoothing capacitor 6, i.e., the output voltage. The output voltage has a value obtained by dividing the amount of energy transfer per second by the output current.

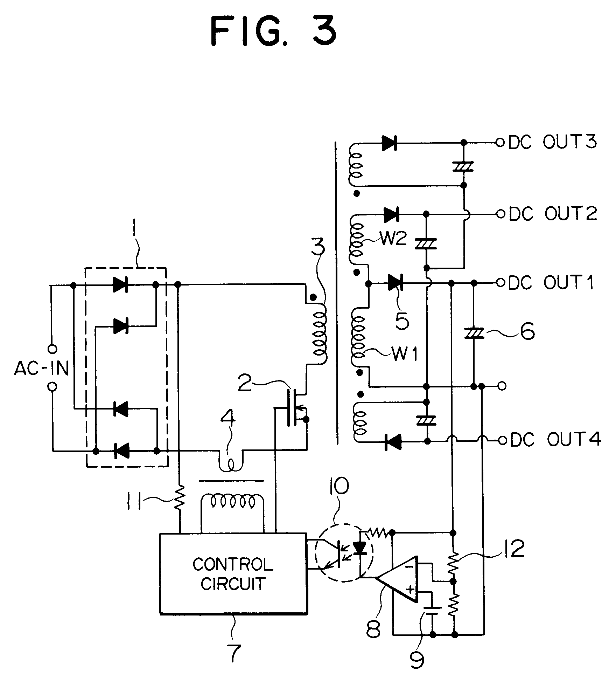

Fig. 3 is a circuit diagram showing an embodiment, in which a flyback transformer 3 has a plurality of secondary windings to form multi-output d.c. power supply.

In this circuit, the circuit for rectifying and smoothing the voltage supplied from a secondary winding W1 and outputting a d.c. voltage to an output DCOUT1 is identical with the circuit of Fig. 2. In addition to this, a tapped-up secondary winding W2 is provided and a d.c. voltage outputted to an output DCOUT2 becomes higher than the output voltage of the output DCOUT1. Further, a further different voltage can be obtained at an output DCOUT3. In addition, a negative d.c. voltage can be obtained at an output DCOUT4. By thus combining various output circuits, it becomes possible to provide d.c. power supply capable of supplying a large number of d.c. voltages.

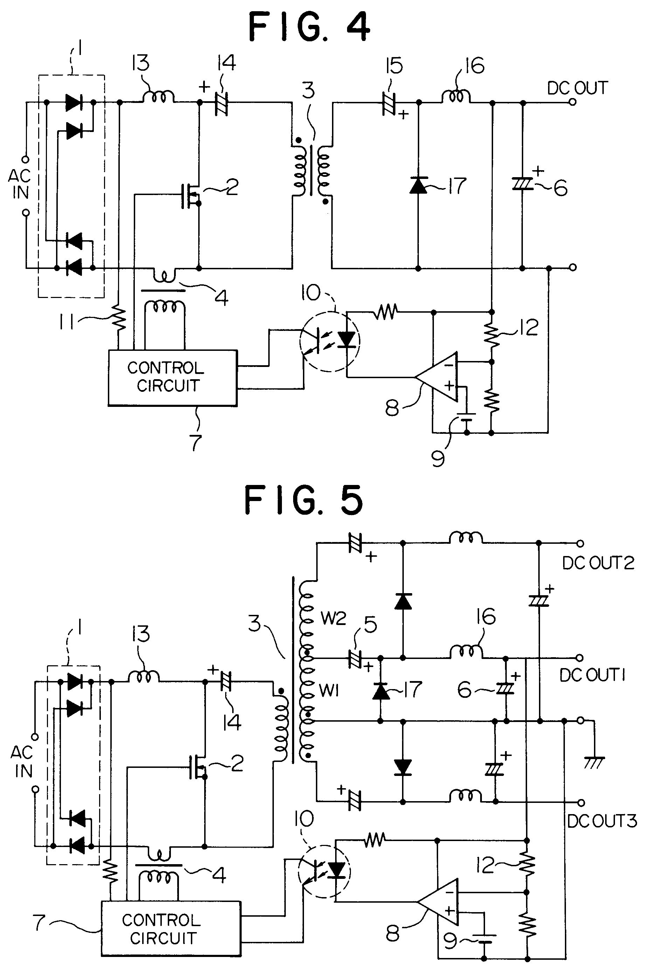

In the system of Fig. 3, the input current fundamentally becomes discontinuous because of use of a flyback method as heretofore described. Strictly speaking, therefore, the current waveform supplied from the a.c. input voltage source to the rectifier 1 takes the shape of discontinuous sawtooth conforming with a sine wave having the same phase as the input voltage. In this case as well, a high power factor can be expected. However, closer approximation to a sine wave and a higher input power factor can be obtained by adding inductance 13 and 16, capacitors 14 and 15, and a diode 17 to the circuit of Fig. 3 and changing the connection of the transistor switch 2 (i.e., by using a so-called Ćuk converter of basic insulation type) as shown in Fig. 4. Components having the same numerals as those of Fig. 3 perform the same functions.

Since the circuit operation of the basic Ćuk converter of insulation type in Fig. 4 is well known, it will not be described here in detail. (The circuit operation of the basic Ćuk converter of insulation type is described in detail in JP-A-54-90521.) A value obtained by dividing the output voltage by using voltage dividing resistors 12 is compared in an error amplifier 8 with reference voltage 9 to measure the difference between them. The result is transmitted to a control circuit 7 via a photocoupler 10 in an electrically insulated state. Pulsating d.c. voltage supplied from the rectifier 1 via a resistor 11 and required for adjusting the waveform of the current flowing through the rectifier 1, and a detected value of the current flowing through the transistor switch 2 supplied from a current transformer 4 are inputted to the control circuit 7. Such a circuit is combined with a Ćuk converter circuit of insulation type in which the input current flowing from the a.c. Input voltage source to the rectifier becomes continuous. As a result, the waveform of the current supplied from the a.c. input voltage source to the rectifier 1 can be approximated to a sine wave having the same phase as the input voltage. It is thus possible to provide an arbitrary stabilized d.c. power supply having a high input power factor.

Fig. 5 is a circuit diagram showing an embodiment, in which a flyback transformer 3 has a plurality of secondary windings to form multi-output d.c. power supply.

In this circuit, the circuit for outputting a d.c. voltage to an output DCOUT1 of a secondary winding W1 is identical with the circuit of Fig. 4. By providing a tapped-up secondary winding W2 in addition to this, an output DCOUT2 can be obtained. In addition, a negative d.c. voltage can be obtained at an output DCOUT3. By thus combining various output circuits, it becomes possible to provide d.c. power supply capable of supplying a large number of d.c. voltages.

As heretofore described, a flyback transformer 3 functioning for both energy storage and energy transfer to the insulated secondary circuit and a photocoupler 10 for transmitting feedback information (error signal) to the control circuit 7 in the insulated state are used in the switching regulator of the present embodiment. Thereby, in the secondary circuit, stabilized d.c. voltage can be so obtained with a high input power factor as to correspond to an arbitrary load and be insulated from the primary circuit. Although not illustrated in the present embodiment, a smoothing filter for absorbing the ripple current generated by high-frequency switching of the transistor switch 2, a noise filter for absorbing spike voltage, and a snubber for protecting the rectifier and the transistor from surge voltage may be added. Further, the photocoupler 10 may be replaced by an alternative configuration. In this alternative configuration, the error output of the error amplifier 8 is let flow through a coil and magnetic force generated by this coil is detected by a Hall element and inputted to the control circuit 7. By this alternative configuration as well, the error signal fed back can be fed back to the control circuit 7 in the insulation state.

In this way, the present invention makes it possible to obtain stabilized d.c. voltage corresponding to a load having an arbitrary value insulated from the input a.c. voltage, with a high input power factor by using a small number of components. By using it as power supply for electric devices such as personal computers, performance concerning the energy efficiency, price, reliability, shape and dimensions can be improved.

## Claims

1. A switching regulator for converting an input a.c. voltage to a d.c. voltage and outputting the d.c. voltage, including:

   rectifying means (1) for converting an input a.c. voltage to a pulsating d.c. voltage;

   conversion means (2, 3) for converting said pulsating d.c. voltage converted by said rectifying means to an a.c. voltage;

   rectifying and smoothing means (5, 6) for rectifying and smoothing the a.c. voltage converted by said conversion means and outputting the rectified and smoothed voltage as a d.c. voltage;

   error detection means (8, 9, 10, 12) for comparing the d.c. voltage converted by said rectifying and smoothing means with a predetermined reference voltage and for detecting an error signal between said d.c. voltage and said predetermined reference voltage; and

   control means (7) for controlling operation of said conversion means so as to make the error detected by said error detection means small and make a current flowing through said rectifying means analogous to a sine wave having the same phase as said input a.c. voltage,

   characterized in that said conversion means comprises:

   a flyback transformer (3) having a primary winding and a secondary winding electrically insulated from each other, said primary winding being connected to said rectifying means, said secondary winding being connected to said rectifying and smoothing means; and

   on-off means (2) so controlled by said control means as to turn on/off, said on-off means in the on-state letting flow a current from said rectifying means into said primary winding to store electromagnetic energy in said primary winding, said on-off means in the off-state outputting the electromagnetic energy stored in said primary winding from said secondary winding to said rectifying and smoothing means, and

   said error detection means further comprises signal transmission means (10) for transmitting said error signal to said control means in an electrically insulated state.

2. A switching regulator according to Claim 1, wherein said primary winding of said flyback transformer (3) is connected to said rectifying means (1) via said on-off means (2).

3. A switching regulator according to Claim 1, wherein said on-off means (2) comprises a power MOSFET.

4. A switching regulator according to Claim 1, wherein said signal transmission means (10) comprises a photocoupler.

5. A switching regulator according to Claim 1, wherein said signal transmission means (10) comprises means for generating a magnetic field proportionate to said error signal and magnetic field detection means for converting the magnetic field generated by said magnetic field generation means to an electric signal.

6. A switching regulator according to Claim 5, wherein said magnetic field detection means comprises a Hall element.

7. A switching regulator according to any one of Claims 1 to 6, wherein said flyback transformer (3) comprises a plurality of secondary windings, which are respectively connected to a plurality of rectifying and smoothing circuits respectively outputting d.c. voltages, and at least one of said rectifying and smoothing circuits is connected to said error detection means.

8. A switching regulator according to Claim 1, wherein inductance 13 and 16, capacitors 14 and 15, and a diode 17 are added to a primary-secondary energy conversion flyback system to attain a high input power factor.

# FIG. 1 PRIOR ART

DCOUT

DC/CD CONV

16

14

15

9

8

13

2

4

CONTROL CIRCUIT

7

11

AC-IN

# FIG. 2

# FIG. 3

# FIG. 4

# FIG. 5

9

## DOCUMENTS CONSIDERED TO BE RELEVANT

EP 92105053.0

| Category | Citation of document with indication, where appropriate, of relevant passages | Relevant to claim | CLASSIFICATION OF THE APPLICATION (Int. Cl.5) |
|---|---|---|---|
| A | US - A - 4 758 937 (USUI) <br> * Column 9, lines 29-34; claims 1,3,23; fig. 6 * | 1,2,3, 7,8 | H 02 M 7/217 <br> H 02 M 3/335 |
| A | US - A - 4 849 869 (TANUMA et al.) <br> * Column 5, lines 6-33; claim 1; fig. 1 * | 1,2,4, 7 | |
| A | US - A - 4 951 186 (BRAKUS, HEINZL) <br> * Claims 1,4,5; fig. 1 * | 1,2,5, 7,8 | |
| D,A | US - A - 4 184 197 (CUK et al.) <br> * Claims 1,23,24 * | 1,7,8 | |
| D,A | PATENT ABSTRACTS OF JAPAN, unexamined applications, P field, vol. 12, no. 276, July 30, 1988 THE PATENT OFFICE JAPANESE GOVERNMENT page 67 P 737 <br> * Kokai-no. 63-55 612 (TOSHIBA) * | 1,4 | TECHNICAL FIELDS SEARCHED (Int. Cl.5) <br><br> H 02 M <br> G 05 F |

The present search report has been drawn up for all claims

| Place of search | Date of completion of the search | Examiner |
|---|---|---|
| VIENNA | 03-07-1992 | MEHLMAUER |